# EUROPÄISCHE PATENTSCHRIFT

(11) **EP 0 462 235 B1**
(45) Veröffentlichungstag und Bekanntmachung des Hinweises auf die Patenterteilung: **14.09.1994**
(21) Anmeldenummer: 90916732.2
(22) Anmeldetag: 19.11.1990
(51) Int. Cl.: H01L 41/09, H01L 41/04

(54) **MEHRFLÄCHENSENSORSTEUERUNG FÜR EINEN WANDERWELLENMOTOR**
MULTI-SURFACE-SENSOR CONTROL UNIT FOR A TRAVELLING-WAVE MOTOR
COMMANDE A MULTIPLES CAPTEURS POUR UN MOTEUR A ONDES PROGRESSIVES

(30) Priorität: 29.11.1989 DE 3939419
(43) Veröffentlichungstag der Anmeldung: 27.12.1991
(73) Patentinhaber: Licentia Patent-Verwaltungs-GmbH, 60596 Frankfurt (DE)
(72) Erfinder: SALOMON, Bernd, D-6000 Frankfurt am Main 50 (DE); ORTHMANN, Reinhard, D-6500 Mainz-Gonsenheim (DE)
(74) Vertreter: Vogl, Leo, Dipl.-Ing.
(86) Internationale Anmeldenummer: EP9001973
(87) Internationale Veröffentlichungsnummer: WO9108594

(56) Entgegenhaltungen:
- EP-A- 298 661
- DE-A- 3 719 537
- TECHNISCHE RUNDSCHAU, vol. 81, no. 46, 17 November 1989, Bern, CH, pp. 102-105 ; G. Schadebrodt et al. : "Der Piezo-Wanderwellenmotor"
- PATENT ABSTRACTS OF JAPAN, vol. 13, no. 192 (E-753)(3540), 9 May 1989 ; & JP-A-112881

## Beschreibung

Die vorliegende Erfindung betrifft ein Verfahren und eine Vorrichtung zur Steuerung eines Wanderwellenmotors, wie er aus der DE 33 06 755 A1 bekannt ist. Der Schwingstator eines solchen enthält Ultraschallerregersysteme, die mit Elektroden versehen und mit dem eigentlichen Schwingkörper kraftschlüssig verbunden sind. In einem Oberflächenbereich des Schwingkörpers steht der Schwingstator unter axialem Druck in Kontakt mit einem Rotor. Rotationsbewegungen des Rotors werden durch im Anregesystem angeregte mechanische Wellen erzeugt, bei denen sich die einzelnen in Schwingung befindlichen Oberflächenelemente des Schwingkörpers näherungsweise auf einer elliptischen Bahn bewegen, so daß aufgrund des Reibschlusses zwischen Stator und Rotoroberfläche in der Kontaktzone zwischen den beiden Oberflächen tangentiale Kräfte entstehen, die zur Ausbildung einer Drehbewegung und eines Drehmoments am Rotor führen.

Der Betriebszustand eines solchen Wanderwellenmotors ist von einer Vielzahl von Parametern abhängig, insbesondere von Temperatur, Axialdruck zwischen Stator und Rotor sowie Frequenz, Amplitude und Form der angeregten Wanderwellen. Die Einstellung der gewünschten Betriebsparameter, Anpassung der Motorspeisefrequenz bei Änderung der mechanischen Eigenfrequenz durch Temperatur und Langzeiteinflüsse sowie die erforderliche Begrenzung der Amplitude der Wanderwellen zum Schutz des Anregesystems und der Kontaktzone zwischen Rotor und Schwingstator erfordern eine Führung solcher Motoren in einem oder mehreren Regelkreisen. Hierfür sind Informationen über den Ist-Zustand des Stator-Rotorsystem, insbesondere die Frequenz, Amplitude und Form der Wanderwelle der Steuerung zuzuführen.

Aus der DE 36 34 329 ist bereits eine Ansteuerschaltung für einen Ultraschallwellenmotor bekannt, bei der gewährleistet wird, daß dieser stets in der Resonanzfrequenz des Motors angesteuert wird. Hierzu ist eine Überwachungselektrode zur Erfassung der Phasendifferenz zwischen dem Signal der Überwachungselektrode und einer zum Antrieb des Motors angelegten periodischen Ansteuerspannung vorgesehen.

Ein Nachteil dieses Ansteuersystems besteht darin, daß nur indirekte Informationen über das Vorhandensein und die Eigenschaften der Wanderwellen ausgewertet werden, da nur eine Sensorfläche vorhanden ist und deshalb nur die Amplitude eines Oberflächenbereiches sensoriert werden kann. Amplitudenwerte und Phasenbeziehungen der Auslenkungen unterschiedlicher Flächenbereiche des Schwingkörpers werden mit der bekannten Ansteuerschaltung nicht ermittelt. Insbesondere kann eine Stehwelle, die direkt keinerlei motorische Effekte hervorruft, nicht von einer Wanderwelle unterschieden werden, da beide bei einem einflächigen Sensor das gleiche Signalbild erzeugen.

Aus Patent Abstracts of Japan, Vol. 13, No. 192 (E-735) (3540) 09 May 1989 sowie aus der Technischen Rundschau Bd. 46/89, S. 103 - 105 ist bereits eine Ansteuerschaltung für einen Wanderwellenmotor bekannt, bei der die Signale von zwei Sensorflächen ausgewertet werden, wobei eine erste Sensorfläche im Maximum einer ersten Stehwelle und eine zweite Sensorfläche im Maximum einer zweiten Stehwelle angeordnet ist. Mit dieser Ansteuerschaltung können die beiden Stehwellen auf gleiche Amplitude und eine Phasendifferenz von π/2 geregelt werden. Bei einem nicht idealsymmetrischen Schwingstator können Verschiebungen auftreten, so daß die Sensoren nicht im Schwingungsmaximum der Stehwellen liegen. Eine Wanderwelle wird dann nicht durch amplitudengleiche Teilsignale und zeitliche Phasenverschiebung von 90° repräsentiert. Entsprechend vorhandene Stehwellenkomponenten müssen dann durch Filterverfahren vom Wanderwellensignal getrennt werden.

Aufgabe der vorliegenden Erfindung ist es, die angeführten Nachteile der bekannten Systeme zur Auswertung und Steuerung des Antriebszustandes eines Wanderwellenmotors zu vermeiden und eine Vorrichtung anzugeben, bei der die Ist-Wert-Signale einer Sensorvorrichtung den Schwingungszustand des Schwingers eindeutig charakterisieren.

Die Aufgabe wird erfindungsgemäß durch die in dem Ansprüche 1 und 4 angegebenen Merkmale gelöst. Weitere vorteilhafte Ausbildungen der Erfindung sind den Unteransprüchen zu entnehmen.

Die Erfindung geht von der Erkenntnis aus, daß eindeutige Ist-Wert-Signale hinsichtlich der tatsächlich im Schwinger herrschenden Schwingungszustände von 3-flächigen Sensoren geliefert werden und in einem Regelkreis einer Auswerte- und Steuerschaltung zugeführt werden. Aus den Teilsignalen der 3-flächigen Sensoren lassen sich durch geometrische Addition Signalvektoren bilden, die ein Abbild der im Schwingkreis angeregten Wanderwelle darstellen. Aus den Teilamplituden der 3-flächensensoren läßt sich auf die Amplitudenverteilung der Wanderwelle schließen. Aus den Phasenverschiebungen zwischen den Teilsignalen der Mehrflächensensoren kann auf die Phasenbeziehungen des jeweils angeregten Schwingungszustandes geschlossen und sicher zwischen einer Wanderwelle und einer Stehwelle unterschieden sowie eindeutig die Ausbreitungsrichtung der Welle und die Motordrehrichtung bestimmt werden.

Weiter ermöglicht es die erfindungsgemäße 3-flächensensorsteuerung, über die Auswertung der Phasendifferenz zwischen den Sensorspannungen, die Motorspeisespannungen in ihrer Phasenlage zueinander derart zu beeinflussen, daß sich eine gewünschte Phasenbeziehung zwischen den einzelnen Sensorspannungen und damit eine gewünschte Form der Wanderwelle ergibt.

Dies ermöglicht auch, fertigungsbedingte Toleranzen in der Polarisationsstruktur und Polarisationshöhe bei piezokeramischen Anregesystemen auf regelungstechnischem Wege zu kompensieren, wodurch geringere Anforderungen an die Fertigungstoleranzen gestellt werden.

Ein 3-flächensensor kann auch vorteilhaft verwendet werden, um Schlupf zwischen dem Schwingstator und dem Rotor zu detektieren, da durch den Schlupf nahezu alle Eigenfrequenzen des Schwingers angeregt werden und ein vielfaches Frequenzgemisch entsteht, das sich am Sensor wiederspiegelt und von der Auswerteschaltung durch einfache Filtermaßnahmen leicht erkannt werden kann.

Im folgenden werden Ausbildungsformen der Erfindung anhand von Zeichnungen näher erläutert.
- Fig. 1: zeigt die Teilungsstruktur eines Ringschwingers zur Erzeugung von steuerbaren mechanischen Wander wellen.
- Fig. 2: zeigt das Anordnungsprinzip eines erfindungsgemäßen Zweiflächensensors.
- Fig. 3: zeigt die Bildung eines Lagevektors LV aus den Signalen eines Zweiflächensensors.
- Fig. 4: zeigt eine Ausführungsform der Regler-Grundstruktur für einen Wanderwellenmotor mit Zweiflächensensor.
- Fig. 5: zeigt die Phasenbeziehung zwischen der Anregefrequenz eines Teilsystems A oder B und einem korrespondierenden Sensor.
- Fig. 6: zeigt das Anordnungsprinzip für einen erfindungsgemäßen Dreiflächensensor.
- Fig. 7: zeigt das Anordnungsprinzip eines weiteren dreiflächigen Sensors.
- Fig. 8: veranschaulicht die Bildung des Lagevektors LV aus den Signalen eines Dreiflächensensors nach Fig. 6.
- Fig. 9: zeigt die Bildung eines Lagevektors LV für einen dreiflächigen Sensor nach Fig. 7.

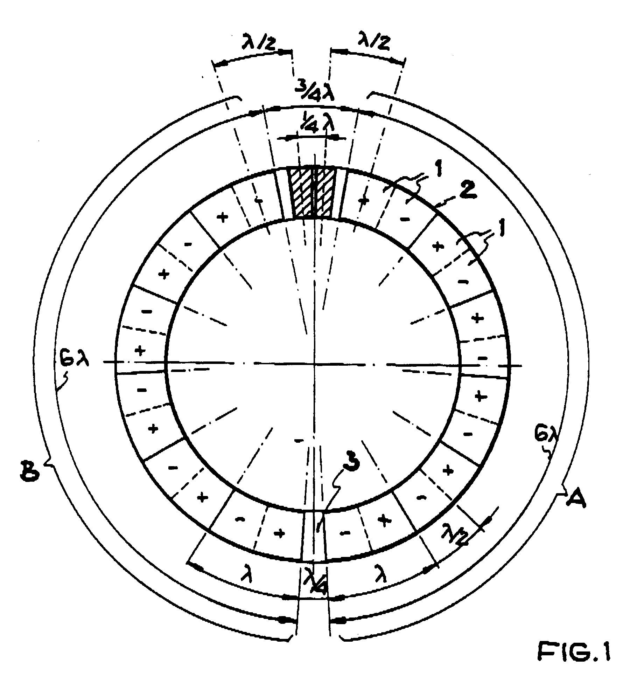

Fig. 1 veranschaulicht die Teilungsstruktur eines Schwingstators, der aus zwei kreisringsegmentförmigen Anregesystemen A und B besteht. Jedes der beispielsweise als Piezokeramik ausgebildeten Anregesysteme weist alternierend positiv und negativ polarisierte Segmente auf, deren Umfangslänge jeweils durch die Wellenlänge λ der anzuregenden Wanderwelle bestimmt wird. Der Gesamtumfang der Kreisringsegmente bei dem in Fig. 1 dargestellten Schwinger hat eine Länge von 13 λ, jeweils 6 λ für den Bereich A bzw. B. Insgesamt ist ein Bereich von einer Wellenlänge λ von der Piezokeramik frei. Die Teilsysteme A und B sind in bekannter Weise um λ/4 gegeneinander räumlich verschoben.

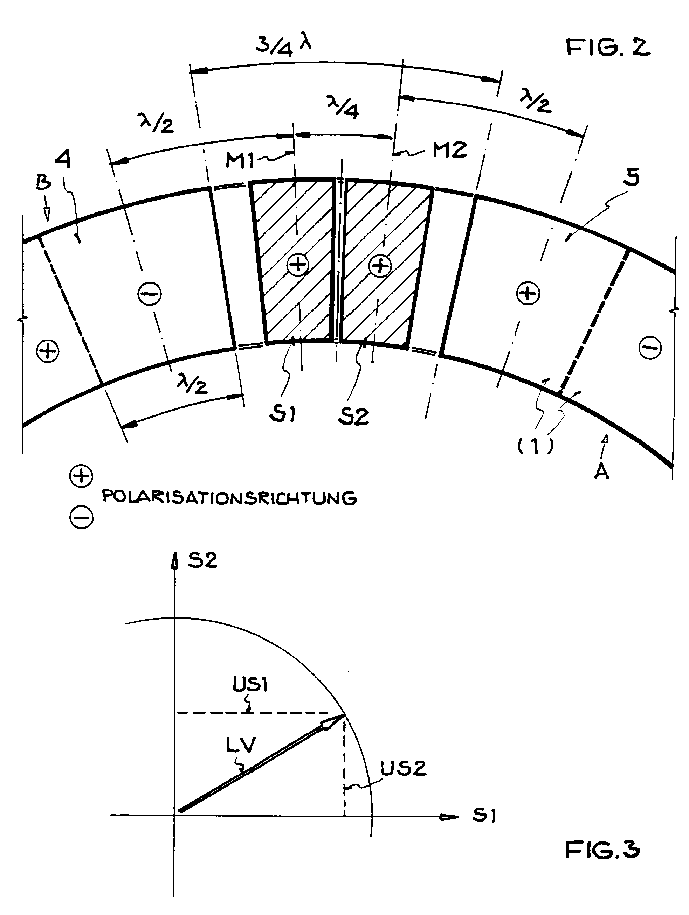

In Fig. 2 ist ein Zweiflächensensor 2 in einem Kreisringsektor mit (3/4) λ Umfangslänge gegenüber einem Sektor mit (1/4) λ Umfangslänge so angeordnet, daß sich eine räumliche Verschiebung von 1/4 λ zwischen den beiden Teilsensoren S1 und S2 ergibt. Das Sensorsignal bildet diejenigen Deformationszustände ab, die an dieser Stelle der Keramik herrschen und von den Deformationen der Ultraschallerregersysteme verursacht werden. Vorteilhaft sind dabei in das Anregesystem integrierte Sensoren, die ebenso aus mit Elektroden versehener Keramik aufgebaut sind, wie die Segmente der Anregesysteme A und B. Lediglich ihre Größe und relative Lage zu einander sowie zu den Anregesystemen ist verschieden, so daß sich hierdurch gegenüber diskreten Sensorenordnungen eine besondere Einfachheit der Herstellung und er Anordnung auf dem Schwingstator ergibt. Durch entsprechende Wahl der Polarisationsrichtung der Keramik kann das Vorzeichen des Meßsignals festgelegt werden. Andererseits ist die Erfindung auch mit diskreten Sensoren realisierbar, die am Anregesystem oder am Schwingkörper angeordnet sind.

Steuert man die Teilsysteme A und B mit stetigen Anregungsfunktionen an, die um π/2, d.h. 90° in ihrer Periode gegeneinander phasenverschoben sind, so wird in bekannter Weise am Umfang des entsprechend bemessenen Schwingers durch Überlagerung der Teilwellen eine Wanderwelle angeregt. Die möglichen Schwingungsformen und Eigenfrequenzen der Wanderwellen werden gekennzeichnet durch die Anzahl der zugehörigen Knotenkreise und Knotengeraden; im Beispiel Fig. 1 weist die Wanderwelle N = 13 Knotengeraden auf.

Wenn die Teilsysteme A und B bei einer Phasenverschiebung von π/2 mit gleichgroßer Amplitude angeregt werden, ergibt sich eine Wanderwelle Y längs des Umfangs gemäß Y = C·cos(Ωt-Nx), wobei C die Amplitude, Ω die Arbeitskreisfrequenz des Schwingers, t die Zeitvariable, N die Anzahl der Wellenlängen am Umfang und x den Ort am Schwingerumfang bezeichnet.

Fig. 2 zeigt einen Ausschnitt eines ringkreisförmigen Schwingers mit zwei Sensorflächen S1 und S2, die symmetrisch in einem 3/4 λ-Sektor zwischen den Segmenten 4 und 5 des Anregesystems und mit einem Abstand λ/4 zwischen ihren Mittenlinien M1 und M2 liegen. Die Teilsensoren S1, S2 haben ebenfalls eine feste Zuordnung zu den Segmenten 4 und 5 der Anregesysteme B und A, und zwar so, daß die Mittenachse der Sensorfläche S1 einen festen Abstand von 1/2 λ zur Mittenachse des Segmentes 4, und damit zum gesamten Anregesystem B annimmt. Ebenso hat die Mittenachse der Sensorfläche S2 einen festen Abstand von 1/2 λ zur Mittenachse des Segmentes 5 und damit zum Anregesystem A. Damit stehen die Sensorsignale nicht nur in einem festen Phasenverhältnis (hier λ/4 = 90°) zueinander, sondern sie weisen auch für die gewollte Wanderwelle eine definierte Abstandsbeziehung zu den Anregesysteme A und B auf. Die aus der Abstandsbeziehung resultierende Phasenbeziehung der Signale ist auch abhängig von der jeweiligen Polarisationsrichtung der Keramikflächen. Bei einem Vorzeichenwechsel der Polarisationsrichtung wechselt ebenfalls das Vorzeichen des aus dieser Keramikfläche gewonnenen Signals.

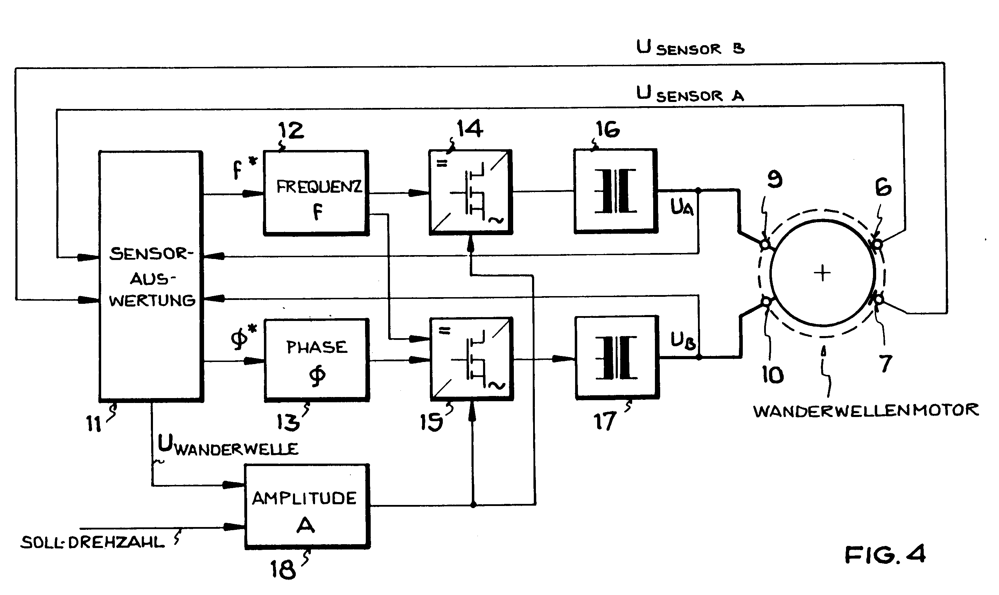

Fig. 3 veranschaulicht die Bildung eines Lagevektors LV aus den Meßsignalen US1 und US2 der Sensoren S1 bzw. S2 eines zweiflächigen Sensors, wie er in Fig. 2 dargestellt wurde.

Eine ideale Wanderwelle mit der Form Y = C·cos(Ωt-Nx) bildet sich bei einem Zweiflächensensor nach Fig. 2 durch amplitudengleiche Teilsignale US1 und US2 ab, mit einer zeitlichen Phasenverschiebung von 90° zwischen den Signalen und einer Signalfrequenz, die gleich der Arbeitsfrequenz des Schwingers ist.

Da die Amplitude der Wanderwelle direkt proportional der Motordrehgeschwindigkeit ist, ist es für eine Regelung der Motordrehzahl wünschenswert, eine Information über die Höhe der Wanderwelle zu gewinnen. Vorhandene Stehwellenkomponenten sollen keinen Einfluß haben.

Eventuell vorhandene Stehwellenkomponenten äußern sich in dem Amplitudensignal als einem Gleichsignal überlagerte Wechselkomponente und können damit mit einfachen analogen oder digitalen Filterverfahren vom Wanderwellensignal getrennt und erkannt werden.

Fig. 6 illustriert den Aufbau eines erfindungsgemäßen dreiflächigen Sensors, bestehend aus den Sensorflächen S3, S4 und S5, die in einem 3/4 λ-Sektor mit einem jeweiligen Abstand von λ/3 zwischen den Mittenlinien M3, M4 und M5 angeordnet sind.

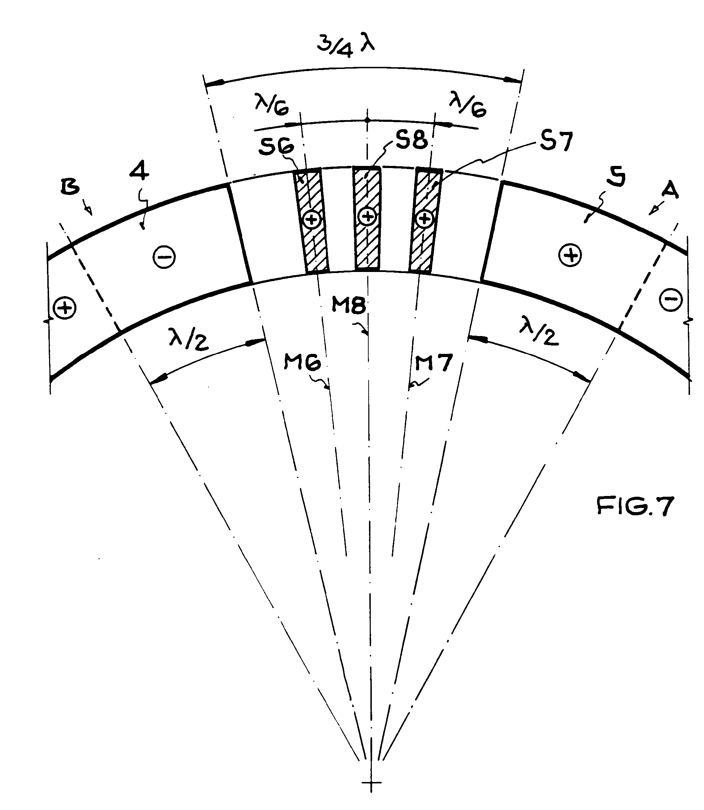

Fig. 7 zeigt eine weitere Ausführungsform eines dreiflächigen Sensors, bei dem zur Verminderung des Flächenbedarfs der Abstand zwischen den Mittenlinien M6, M7 und M8 der Sensorflächen S6, S7 und S8 auf λ/6 reduziert worden ist.

Eine Anordnung der Sensorflächen nach Fig. 7 ermöglicht, ebenso wie die Anordnung nach Fig. 6 eine Darstellung der Meßsignale in einem dreiphasigen Koordinatensystem, bei dem die Koordinatenachsen um 120° bezogen auf die Wellenlänge λ der Wanderwelle zueinander verschoben sind.

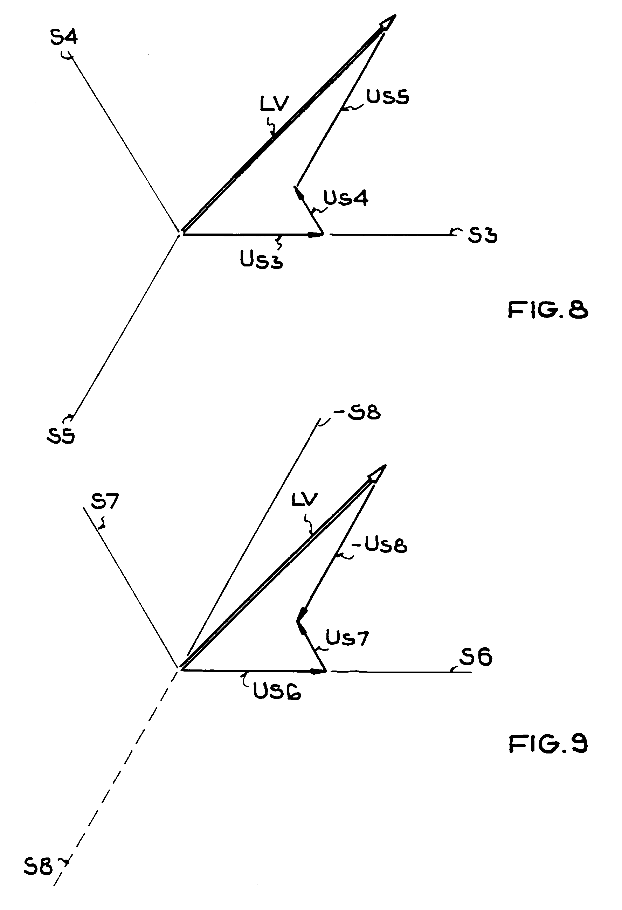

Fig. 8 zeigt die Bildung des Lagevektors LV aus den Teilsignalen US3, US4, US5 bei einer Anordnung nach Fig. 6. Die Lage der Sensor-Mittenlinien M3, M4, M6 relativ zueinander entspricht direkt der Lage der Koordinatenachsen S3, S4, S5.

Fig. 9 zeigt die Bildung des Lagevektors LV aus den Sensorsignalen US6, US7 und US8 einer Anordnung nach Fig. 7. Hier hat die räumlich gegenüber der Fig. 6 veränderte Lage der Teilsensoren S6, S7, S8 auch eine andere Zuordnung zwischen Sensorsignal und Koordinatenachsen zur Folge. Wird die Sensorachse S6 als Basiskoordinate und die Sensorachse S7 als die in Zählrichtung nächste Koordinate gewählt, ist die Sensorachse S8 als die "umgeklappte" dritte Koordinate zu setzen. Die geometrische Addition dieser vorzeichenrichtig bewerteten Teilvektoren ergibt auch hier eine eindeutige Bestimmung des Lagevektors LV der Wanderwelle.

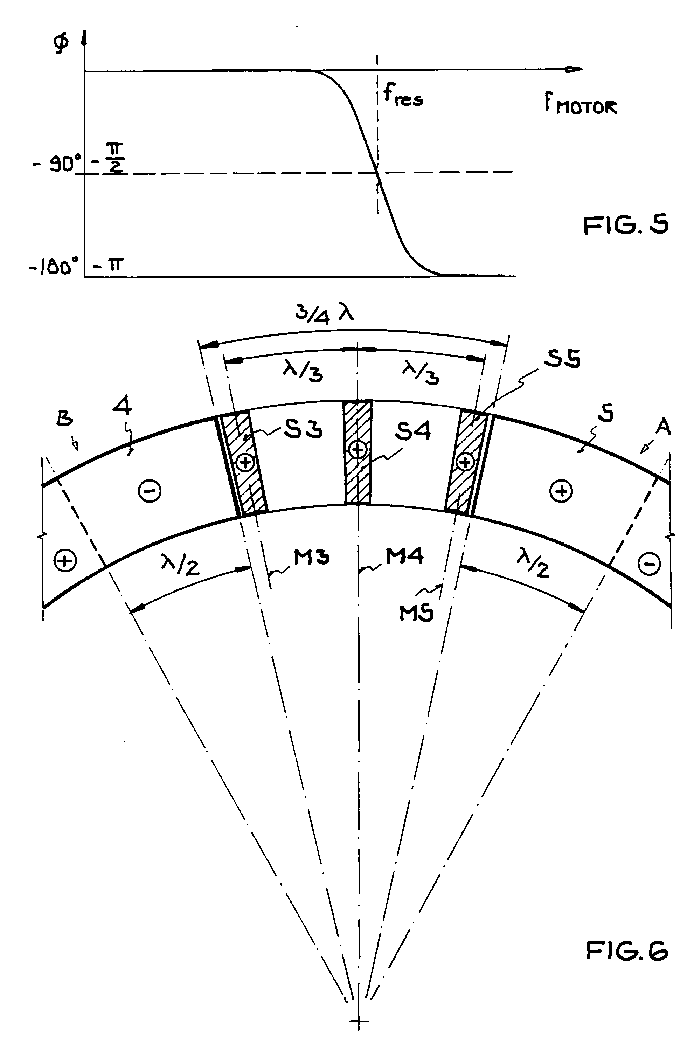

Die Anordnung nach Fig. 5 ermöglicht eine größere Auslegung der einzelnen Sensorflächen und damit eine größere Meßsignalamplitude, mit dem Vorteil eines größeren Signal/Stör-Abstandes.

Bei allen dreiphasigen Anordnungen ist vorteilhaft, daß Oberwellenanteile in der Wanderwelle, die eine durch 3 teilbare Ordnung aufweisen, unterdrückt werden. Hervorzuheben ist auch hier, daß durch Veränderung der Polarisationsachsen die Vorzeichen der Meßsignale entsprechend einer um 180° verschobenen Phase umzukehren sind.

## Patentansprüche

1. Vorrichtung zur Auswertung und Steuerung des Antriebszustandes eines Wanderwellenmotors, der aus einem Stator mit elastischem Schwingkörper und einem aus einer Vielzahl von Segmenten bestehenden Ultraschallschwingungen erzeugenden Anregesystem und einem mit dem Stator in einem Oberflächenbereich unter Druck in Kontakt stehenden Rotor besteht und eine am Schwingkörper oder dem Anregesystem angeordnete Sensorvorrichtung mit mindestens zwei Sensorflächen aufweist, deren Zustandssignale in einem Regelkreis einer Auswerte- und Steuerschaltung zur Steuerung des Anregesystems zugeführt werden, wobei das Anregesystem aus zwei kreisringförmigen Teilsystemen (A, B) besteht, die räumlich gegeneinander um einen Betrag von (n + ¹/₄) λ verschoben sind, wobei n eine positive ganze Zahl und λ die Wellenlänge einer anzuregenden Wanderwelle bezeichnet, **dadurch gekennzeichnet**,
- daß erste bis dritte Sensorflächen (S3, S4, S5; S6, S7, S8) vorgesehen sind, die auf einem zu den Teilsystemen (A, B) konzentrischen Kreissegment angeordnet sind und gegeneinander räumlich um λ/3 verschoben sind.

2. Vorrichtung nach Anspruch 1, dadurch gekennzeichnet, daß die Sensorflächen in das Anregesystem integriert sind und aus piezokeramischem Material bestehen.

3. Vorrichtung nach Anspruch 1, dadurch gekennzeichnet, daß zwischen den Segmenten (4, 5) des Anregesystems, die den Sensorflächen am nächsten liegen, ein Abstand von 3/4 λ vorgesehen ist.

4. Vorrichtung zur Auswertung und Steuerung des Antriebszustandes eines Wanderwellenmotors, der aus einem Stator mit elastischem Schwingkörper und einem aus einer Vielzahl von Segmenten bestehenden Ultraschallschwingungen erzeugenden Anregesystem und einem mit dem Stator in einem Oberflächenbereich unter Druck in Kontakt stehenden Rotor besteht und eine am Schwingkörper oder dem Anregesystem angeordnete Sensorvorrichtung mit mindestens zwei Sensorflächen aufweist, deren Zustandssignale in einem Regelkreis einer Auswerte- und Steuerschaltung zur Steuerung des Anregesystems zugeführt werden, wobei das Anregesystem aus zwei kreisringförmigen Teilsystemen (A, B) besteht, die räumlich gegeneinander um einen Betrag von (n + ¹/₄) λ verschoben sind, wobei n eine positive ganze Zahl und λ die Wellenlänge einer anzuregenden Wanderwelle bezeichnet, dadurch gekennzeichnet, daß erste bis dritte Sensorflächen (S3, S4, S5; S6, S7, S8) vorgesehen sind, die auf einem zu den Teilsystemen (A, B) konzentrischen Kreissegment angeordnet sind und gegeneinander räumlich um λ/6 verschoben sind.

5. Vorrichtung nach Anspruch 4, dadurch gekennzeichnet, daß zwischen den Segmenten (4, 5) des Anregesystems, die den Sensorflächen am nächsten liegen, ein Abstand von 3/4 λ vorgesehen ist.

6. Vorrichtung nach Anspruch 4, dadurch gekennzeichnet, daß die Sensorflächen in das Anregesystem integriert sind und aus piezokeramischem Material bestehen.

## Claims

1. Device for the monitoring and controlling of the drive state of a travelling-wave motor, which consists of a stator with an elastic vibrating body, an exciter system consisting of a plurality of segments and generating ultrasonic vibrations, a rotor standing in contact with the rotor under pressure in a surface region, and a sensor device, which is arranged at the vibrating body or the exciter system, with at least two sensor surfaces, the state signals of which are fed into a regulating circuit of a monitoring and control circuit, wherein the exciter system consists of two circularly ring-shaped partial systems (A, B), which are spatially displaced relative to one another by an amount of (n + 1/4) λ, wherein n denotes a positive whole number and λ the wavelength of a travelling wave to be excited, characterised thereby
- that first to third sensor surfaces (S3, S4, S5; S6, S7, S8) are provided, which are arranged on a circular segment concentric to the partial systems (A, B) and are spatially displaced relative to one another by λ/3.

2. Device according to claim 1, characterised thereby that the sensor surfaces are integrated into the exciter system and consist of piezo-ceramic material.

3. Device according to claim 1, characterised thereby that a spacing of 3/4 λ is provided between the segments (4, 5) of the exciter system which lie closest to the sensor surfaces.

4. Device for the monitoring and controlling of the drive state of a travelling-wave motor, which consists of a stator with an elastic vibrating body, an exciter system consisting of a plurality of segments and generating ultrasonic vibrations, a rotor standing in contact with the rotor under pressure in a surface region, and a sensor device, which is arranged at the vibrating body or the exciter system, with at least two sensor surfaces, the state signals of which are fed into a regulating circuit of a monitoring and control circuit, wherein the exciter system consists of two circularly ring-shaped partial systems (A, B), which are spatially displaced relative to one another by an amount of (n + 1/4) λ, wherein n denotes a positive whole number and λ the wavelength of a travelling wave to be excited, characterised thereby that first to third sensor surfaces (S3, S4, S5; S6, S7, S8) are provided, which are arranged on a circular segment concentric to the partial systems (A, B) and are spatially displaced relative to one another by λ/6.

5. Device according to claim 4, characterised thereby, that a spacing of 3/4 λ is provided between the segments (4, 5) of the exciter system which lie closest to the sensor surfaces.

6. Device according to claim 4, characterised thereby that the sensor surfaces are integrated into the exciter system and consist of piezo-ceramic material.

## Revendications

1. Dispositif pour exploiter et commander le régime d'entraînement d'un moteur à ondes progressives, composés d'un stator possédant un corps vibrant élastique et d'un système d'excitation constitué d'une pluralité de segments et générant des vibrations ultrasonores, ainsi que d'un rotor qui est en contact avec le stator, sous pression, dans une zone de surface, dispositif qui comprend un dispositif de capteur possédant au moins deux faces de capteur dont les signaux d'état sont envoyés dans un circuit de réglage d'un montage d'exploitation et de commande pour commander le système d'excitation, lequel est constitué de deux systèmes partiels (A, B) en forme de couronne, qui sont mutuellement décalés dans l'espace d'une quantité correspondant à (n + 1/4) λ, où n désigne un nombre entier positif et λ désigne la longueur d'onde d'une onde progressive à exciter, caractérisé en ce que
- des première à troisième faces de capteur (S3, S4, S5; S6, S7, S8) sont prévues, qui sont disposées sur un segment de cercle concentrique aux systèmes partiels (A, B) et sont mutuellement décalées dans l'espace de λ/3.

2. Dispositif selon la revendication 1, caractérisé en ce que les faces de capteur sont intégrées dans le système d'excitation et sont faites de matériau céramique piézoélectrique.

3. Dispositif selon la revendication 1, caractérisé en ce qu'une distance correspondant à 3/4 λ est prévue entre les segments (4, 5) du système d'excitation situés le plus proche des faces de capteur.

4. Dispositif pour exploiter et commander le régime d'entraînement d'un moteur à ondes progressives, composés d'un stator possédant un corps vibrant élastique et d'un système d'excitation constitué d'une pluralité de segments et générant des vibrations ultrasonores, ainsi que d'un rotor qui est en contact avec le stator, sous pression, dans une zone de surface, dispositif qui comprend un dispositif de capteur possédant au moins deux faces de capteur dont les signaux d'état sont envoyés dans un circuit de réglage d'un montage d'exploitation et de commande pour commander le système d'excitation, lequel est constitué de deux systèmes partiels (A, B) en forme de couronne, qui sont mutuellement décalés dans l'espace d'une quantité correspondant à (n + 1/4) λ, où n désigne un nombre entier positif et λ désigne la longueur d'onde d'une onde progressive à exciter, caractérisé en ce que
- des première à troisième faces de capteur (S3, S4, S5; S6, S7, S8) sont prévues, qui sont disposées sur un segment de cercle concentrique aux systèmes partiels (A, B) et sont mutuellement décalées dans l'espace de λ/6.

5. Dispositif selon la revendication 4, caractérisé en ce qu'une distance correspondant à 3/4 λ est prévue entre les segments (4, 5) du système d'excitation situés le plus proche des faces de capteur.

6. Dispositif selon la revendication 4, caractérisé en ce que les faces de capteur sont intégrés dans le système d'excitation et sont faites de matériau céramique piézoélectrique.
